# EUROPEAN PATENT APPLICATION

(11) **EP 0 889 638 A2**
(43) Date of publication of application: **07.01.1999**
(21) Application number: 98112307.8
(22) Date of filing: 02.07.1998
(51) Int. Cl.: H04N 1/387

(54) **Image processing apparatus and method**

(30) Priority: 03.07.1997 JP 178194/97; 26.12.1997 JP 360241/97; 11.06.1998 JP 163642/98
(71) Applicant: CANON KABUSHIKI KAISHA, Tokyo (JP)
(72) Inventor: Matsushima, Hiroshi, Ohta-ku, Tokyo (JP)
(74) Representative: Pellmann, Hans-Bernd, Dipl.-Ing.

(57) **Abstract**

It is an object of this invention to allow a user to enjoy seeing images on a film which are reproduced on a TV set. To achieve this object, there is provided a film image reproducing apparatus including a unit for reading the images from the film, a unit for reading magnetic information on the film, and a unit capable of outputting signals that allow the images to be displayed on a monitor. This apparatus superimposes title information read from the magnetic information on a prepared image, and outputs the resultant image data.

## Description

### BACKGROUND OF THE INVENTION

The present invention relates to an image processing apparatus for reading an image recorded on an original and information associated with the image, an image processing method, a film image display system, a film image display method, a film image display apparatus, a film image read apparatus, a reproducing apparatus, a reproducing method, and a storage medium.

A film image reproducing apparatus for reproducing an image from a developed film onto a monitor or the like has been known. Advanced photo system films capable of magnetically recording photography information together with photographic images have recently been developed. Film image reproducing apparatuses suited for such advanced photo system films have also been proposed. Such apparatuses can display photography information together with reproduced film images.

In conventional film image reproducing apparatuses, when photography information is to be displayed together with a reproduced film image, the photography information recorded simultaneously with photographing operation can only be displayed in the recorded form. For example, the date of photography as photography information can only be displayed together with a photographic image.

For example, in the apparatus disclosed in Japanese Patent Laid-Open No. 8-129236, as a conventional film image reproducing apparatus using the above advanced photo system film, information about the frames to be reproduced (displayed) and information about the frames not to be reproduced are recorded on the magnetic recording portion on the film.

Another apparatus has been proposed, in which reproduction conditions and the like under which images on a film are to be reproduced are recorded on the magnetic recording portion.

In any of the above conventional film image read apparatuses, however, special information is magnetically recorded in a special format instead of a general format. This makes it difficult to maintain compatibility with other apparatuses.

### SUMMARY OF THE INVENTION

The present invention has been made in consideration of the above problems, and has as its object to provide an image processing apparatus, an image processing method, a reproducing apparatus, a reproducing apparatus, a reproducing method, and a storage medium which can effectively use photography information recorded during photographing operation.

It is another object of the present invention to provide a film image display system, a film image display method, a film image display apparatus, a film image read apparatus, and a storage medium which can continuously and automatically reproduce a plurality of film images while maintaining compatibility with other devices.

In order to solve the above problems and achieve the above objects, an image processing apparatus according to the present invention is characterized by comprising image read means for reading an image on an original, information read means for reading title information of the image recorded on the original, storage means for storing a plurality of images, and control means for performing control to read out a predetermined image from the storage means in accordance with the title information read by the information read means and synthesize/output the readout image and the image read from the original by the image read means.

An image processing method according to the present invention is characterized by comprising the steps of reading an image on an original, reading title information of the image recorded on the original, reading out a predetermined image from storage means in accordance with the title information read in the information read step, and synthesizing and outputting the readout image and the image read from the original in the image read step.

A storage medium according to its first aspect of the present invention is characterized by storing the image processing method comprising the steps of:
reading an image on an original;
reading title information of the image recorded on the original;
reading out a predetermined image from storage means in accordance with the title information read in the information read step; and
synthesizing and outputting the readout image and the image read from the original in the image read step as a program.

A film image display system according to the present invention is characterized by comprising additional information read means for reading at least one additional information from overall frame title information, frame title information, and frame date information which are recorded on a film, image read means for reading an image recorded on the film, and image effect addition means for adding a predetermined image effect in accordance with the additional information read by the additional information read means when the film image read by the image read means is to be displayed.

A film image display method according to the present invention is characterized by comprising the additional information read step of reading at least one additional information from overall frame title information, frame title information, and frame date information which are recorded on a film, the image read step of reading an image recorded on the film, and the image effect addition step of adding a predetermined image effect in accordance with the additional information read in the additional information read step when the film image read in the image read step is to be displayed.

A storage medium according to its second aspect of the present invention is characterized by storing the image display method comprising:
the additional information read step of reading at least one additional information from overall frame title information, frame title information, and frame date information which are recorded on a film;
the image read step of reading an image recorded on the film; and
the image effect addition step of adding a predetermined image effect in accordance with the additional information read in the additional information read step when the film image read in the image read step is to be displayed as a program.

A film image display apparatus according to the present invention is characterized by comprising additional information input means for reading and inputting at least one additional information from overall frame title information, frame title information, and frame date information which are recorded on a film, image input means for reading and inputting an image recorded on the film, and image effect addition means for adding a predetermined image effect in accordance with the additional information input by the additional information input means when the film image input by the image input means is to be displayed.

A film image read apparatus according to its first aspect of the present invention is characterized by comprising information read means for reading title information and date information of each frame which are recorded on a film, image read means for reading a film image on each frame, image effect addition means for adding a plurality of types of image effects to the read film images on the respective frames, output means for continuously outputting the read film images on the respective frames to a monitor, switching image effect addition means for adding a plurality of types of image effects when frames are switched during reproduction on the monitor, and control means for selecting the image effects to be added by the image effect addition means and the switching image effect addition means, which are determined in advance in accordance with each frame title, when title information of each frame is recorded, and selecting a title corresponding to a date based on the date information of each frame and selecting image effects to be added by the image effect addition means and the switching image effect addition means which are determined in advance in correspondence with the title, when no title information of each frame is recorded.

A film image read apparatus according to its second aspect of the present invention is characterized by comprising information read means for reading title information and date information of each frame which are recorded on a film, image read means for reading a film image on each frame, image effect addition means for adding a plurality of types of image effects to the read film images on the respective frames, output means for continuously outputting the read film images on the respective frames to a monitor, switching image effect addition means for adding a plurality of types of image effects when frames are switched during reproduction on the monitor, and control means for selecting the image effects to be added by the image effect addition means and the switching image effect addition means, which are determined in advance in accordance with each frame title, when title information of each frame is recorded, and selecting image effects to be added by the image effect addition means and the switching image effect addition means which correspond to a previously selected title until a date based on the date information of each frame changes, when no title information of each frame is recorded.

A reproducing apparatus according to its first aspect of the present invention is characterized in that predetermined graphic information is automatically synthesized with image information on the basis of additional information added to the image information.

A reproducing apparatus according to its second aspect of the present invention is characterized in that display of image information is automatically panned in a predetermined direction on the basis of additional information added to the image information.

A reproducing apparatus according to its third aspect of the present invention is characterized in that a color or luminance of image information to be displayed on a display is fixed to a predetermined state when a print time fixing signal added to the image information is detected.

A reproducing apparatus according to its fourth aspect of the present invention is characterized in that a color or luminance of image information to be displayed on a display is fixed to a predetermined state when a signal indicating a common group and added to a plurality of image information is detected.

A reproducing method according to its first aspect of the present invention is characterized by comprising automatically synthesizing predetermined graphic information with image information on the basis of additional information added to the image information.

A reproducing method according to its second aspect of the present invention is characterized by comprising automatically panning display of image information in a predetermined direction on the basis of additional information added to the image information.

A reproducing method according to its third aspect of the present invention is characterized by comprising fixing a color or luminance of image information to be displayed on a display to a predetermined state when a print time fixing signal added to the image information is detected.

A reproducing method according to its fourth aspect of the present invention is characterized by comprising fixing a color or luminance of image information to be displayed on a display to a predetermined state when a signal indicating a common group and added to a plurality of image information is detected.

A storage medium according to its third aspect of the present invention is characterized by storing the reproducing method comprising automatically synthesizing predetermined graphic information with image information on the basis of additional information added to the image information as a program.

Other objects and advantages besides those discussed above shall be apparent to those skilled in the art from the description of a preferred embodiment of the invention which follows. In the description, reference is made to accompanying drawings, which from a part hereof, and which illustrate an example of the invention. Such example, however, is not exhaustive of the various embodiments of the invention, and therefore reference is made to the claims which follow the description for determining the scope of the invention.

### BRIEF DESCRIPTION OF THE DRAWINGS

Fig. 1 is a block diagram showing a film image reproducing apparatus according to an embodiment of the first embodiment;
Fig. 2 is a flow chart for explaining the reproducing operation of the first embodiment;
Fig. 3 is a view showing the state of a film cartridge;
Fig. 4 is a view showing an index window;
Fig. 5 is a flow chart for explaining the reproducing operation of the first embodiment;
Figs. 6A to 6C are views showing an example of image synthesis in the first embodiment;
Fig. 7 is a flow chart for explaining the reproducing operation of the first embodiment;
Figs. 8A to 8C are views showing an example of image synthesis in the first embodiment;
Fig. 9 is a flow chart for explaining the reproducing operation of the first embodiment;
Figs. 10A to 10C are views showing an example of image synthesis in the first embodiment;
Fig. 11 is a view showing the distance measuring points and photometric areas of a camera;
Fig. 12 is a flow chart for explaining the reproducing operation of the first embodiment;
Fig. 13 is a view showing zooming operation in the first embodiment;
Fig. 14 is a view showing zooming operation in the first embodiment;
Fig. 15 is a flow chart for explaining the reproducing operation of the first embodiment;
Fig. 16 is a view showing panning operation in the first embodiment;
Fig. 17 is a flow chart for explaining the reproducing operation of the first embodiment;
Fig. 18 is a flow chart for explaining the reproducing operation of the first embodiment;
Fig. 19 is a flow chart for explaining the reproducing operation of the first embodiment;
Fig. 20 is a flow chart for explaining the reproducing operation of the first embodiment;
Fig. 21 is a flow chart for explaining the reproducing operation of the first embodiment;
Fig. 22 is a flow chart for explaining the reproducing operation of the first embodiment;
Fig. 23 is a flow chart for explaining the reproducing operation of the first embodiment;
Fig. 24 is a flow chart for explaining the reproducing operation of the first embodiment;
Fig. 25 is a flow chart for explaining the reproducing operation of the first embodiment;
Fig. 26 is a flow chart showing the basic operation of the second embodiment;
Fig. 27 is a flow chart showing the operation of the second embodiment;
Fig. 28 is a view showing a table determined and stored in advance in correspondence with titles;
Fig. 29 is a flow chart showing the operation of the third embodiment;
Fig. 30 is a view showing a table in which effects and scene change effects are stored in advance in correspondence with frame title information corresponding to images to be reproduced;
Fig. 31 is a flow chart showing the operation of the fourth embodiment;
Fig. 32 is a view showing a table in which titles are determined and stored in advance on the basis of date information;
Fig. 33 is a flow chart showing the operation of the fifth embodiment; and
Fig. 34 is a block diagram showing the arrangement of the sixth embodiment.

### DETAILED DESCRIPTION OF THE PREFERRED EMBODIMENTS

A film image reproducing apparatus capable of reading an advanced photo system film, to which the present invention is applied, will be described.

### (First Embodiment)

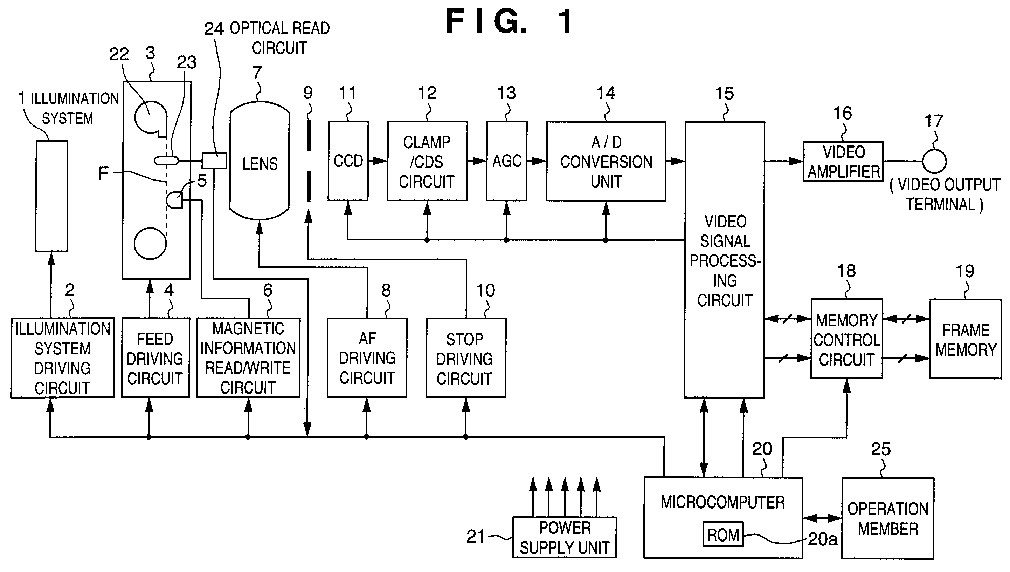

Fig. 1 is a block diagram showing the arrangement of a film image reproducing apparatus according to the first embodiment. Referring to Fig. 1, reference numeral 20 denotes a microcomputer as a control means, which controls the overall apparatus to be described below. A developed film F is fed from a cartridge 22 to a predetermined position by a feed driving circuit 4. This feeding position is controlled by detecting a perforation in the film using an optical detection element 23 and an optical read circuit 24.

An illumination system 1 for illuminating the film F is positioned on the opposite side to a CCD 11 through the film F. The illumination system 1 is turned on by an illumination system driving circuit 2. An image on the film illuminated by the illumination system 1 is formed on the CCD 11 as an image read means through an optical lens 7, and is photoelectrically converted to be extracted as an image signal. Photography information is magnetically recorded on the advanced photo system film read in this case. A magnetic information read/write circuit 6 as an information read means reads/writes magnetic information from/on this developed film by using a head unit 5.

The image signal output from the CCD 11 is subjected to basic analog signal processing before A/D conversion, e.g., changing of clamp level and AGC reference level, in a clamp/CDS circuit 12 and an AGC 13. An A/D conversion unit 14 converts the analog CCD output signal into a digital signal. A video signal processing circuit 15 performs filtering, color conversion, and gamma/knee processing for the digital CCD image data, and outputs the resultant data to a memory control circuit 18. The video signal processing circuit 15 also incorporates a D/A conversion unit to convert the video signal input from the CCD 11 or the image data input from the memory control circuit 18 into an analog signal. This analog signal is amplified by a video amplifier 16 and output to a monitor or the like through a video output terminal 17.

The video signal output from the video signal processing circuit 15 is loaded into the microcomputer 20 to perform exposure control, white balance control, and auto-focus control on the CCD 11.

The memory control circuit 18 performs memory write/read control, i.e., storing the digital image data input from the video signal processing circuit 15 in a frame memory 19 and outputting the image data from the frame memory 19 to the video signal processing circuit 15. The frame memory 19 is an image memory capable of storing at least image data corresponding to an index window and one or more image windows. In general, a VRAM, an SRAM, a DRAM, or an SDRAM is used. In this system, fixed image data such as character data can be stored in this memory in addition to the image data read from the CCD.

A stop driving circuit 10 is constituted by, for example, an auto iris and the like, and serves to change the optical aperture value. An AF (Auto Focus) driving circuit 8 includes, for example, a stepping motor, and forms an in-focus image on the film by changing the position of the focusing lens in the lens 7. A power supply unit 21 supplies necessary power to each IC and each driving system. An operation member 25 transfers a user operation state to the microcomputer 20. The microcomputer 20 controls the respective units in accordance with a change in the state of the operation member 25. The microcomputer 20 incorporates a ROM 20a as a storage medium in which control programs (to be described below) are stored. The apparatus is controlled in accordance with the programs stored in the ROM 20a. This program storage medium is not limited to the ROM. For example, a detachable storage medium such as an FD, an HDD, or a CD-ROM may be used.

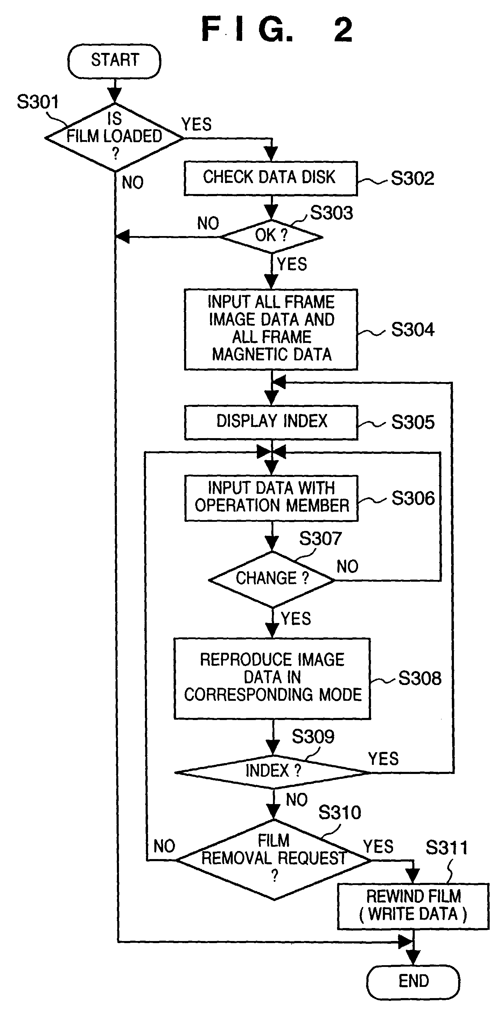

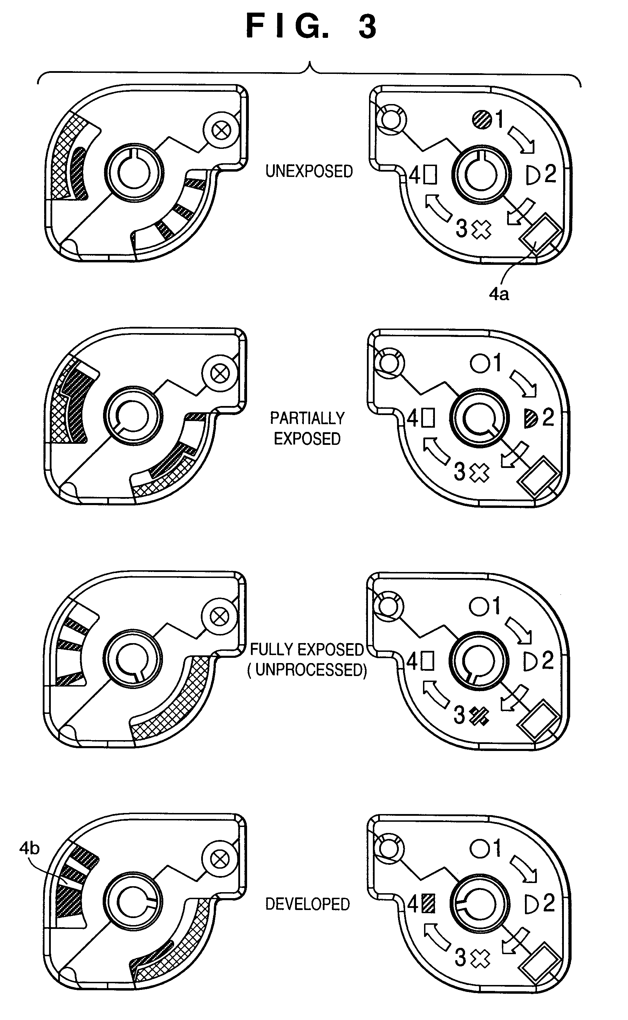

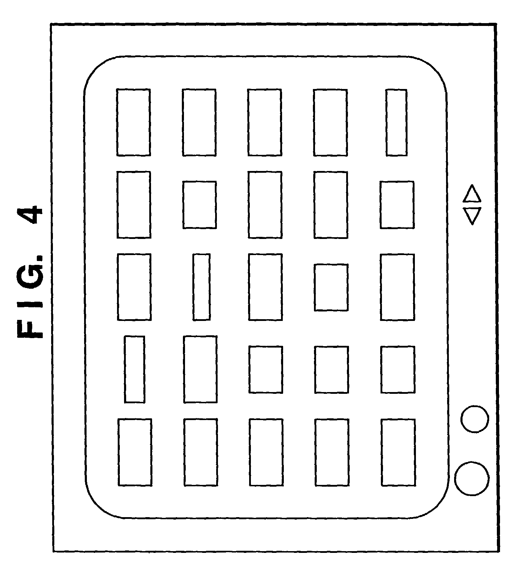

The operation of this apparatus will be described next with reference to the flow chart of Fig. 2. Fig. 3 shows the status of the advanced photo system film. The state of this film, i.e., whether the film is unexposed, partially exposed, fully exposed (without development), or developed, is indicated on the cartridge. Fig. 4 shows an index window that displays all the images recorded on one film in one window.

First of all, in step S301 in Fig. 2, the microcomputer 20 checks whether an advanced photo system film is loaded in this apparatus. If NO in step S301, the operation is terminated. If YES in step S310, the flow advances to step S302 to perform reproducing operation.

In step S302, the microcomputer 20 checks a developed state indication tab 4a or a data disk 4b to determine whether the film is a color negative film, a color positive film, a monochrome film, or a cleaning cartridge. This check is performed by using, for example, a switch or photoreflector (not shown).

When the check is complete in step S302, the flow advances to step S303. If the film is an undeveloped film, reproduction is inhibited, and the operation is terminated. If the film is a developed film, the flow advances to step S304. In the step S304, the microcomputer 20 opens the cover of the film cartridge to pull out the film by using the feed driving circuit 4, and reads the images of all the frames by using the CCD 11. At the same time, the microcomputer 20 loads the magnetic data on all the frames by using the magnetic information read/write circuit 6.

It suffices even if the image data read by the CCD 11 are coarse data, because they are displayed in an index window like the one shown in Fig. 4. For this reason, the microcomputer 20 stores the image data in the frame memory 19 after decreasing the data amount by thinning processing instead of storing all the data. In this case, a dedicated area for storing the index window data is ensured in the frame memory 19. Ensuring such a dedicated area obviates the necessity to read the images of all the frames every time an index window display request is generated.

Upon completion of storage of the index window data, the flow advances to step S305 to output the loaded image data as index image data to the video amplifier 16. According to the index window in Fig. 4, the sizes of the respective frames vary because they are displayed on the basis of the sizes of pictures, e.g., panoramic/high-definition pictures, as magnetic information. When a 40-exposure film is to be used, index image data is displayed over two windows.

When the display is complete, the flow advances to step S306 to check whether any data is input from the operation member 25. When the check is complete, the flow advances to step S307. If any data is input from the operation member 25, the flow advances to step S308. If NO data is input, the flow returns to step S306. In step S308, the microcomputer 20 switches the reproduction modes to load image data from the CCD 11 in accordance with the input data. In this case, the reproduction modes to be switched include, for example, an automatic reproduction mode programmed in advance and a reproduction mode of reproducing frames one by one. In the frame-by-frame reproduction mode, frame feed is performed.

When reproduction based on the mode is complete, the microcomputer 20 checks in step S309 whether an index window display request is generated. In response to this request, the microcomputer 20 displays photography data, the titles, the dates, and also switches displays in accordance with changes of screen orientation and aspect ratio. If YES in step S309, the flow returns to step S305 to display an index window. If NO in step S309, the flow advances to step S310.

In step S310, the microcomputer 20 checks whether a film removal request is generated. If NO in step S310, the flow returns to step S306. If YES in step S310, the flow advances to step S311 to rewind the film. In step S311, the microcomputer 20 rewinds the film by using the feed driving circuit 4, sets the position of the data disk to the "developed" position, and closes the cover of the cartridge, thereby allowing removal of the film. In addition, the microcomputer 20 writes magnetic information on the film by using the magnetic information read/write circuit 6 and the head unit 5, as needed, while the film is rewound. The operation is then terminated.

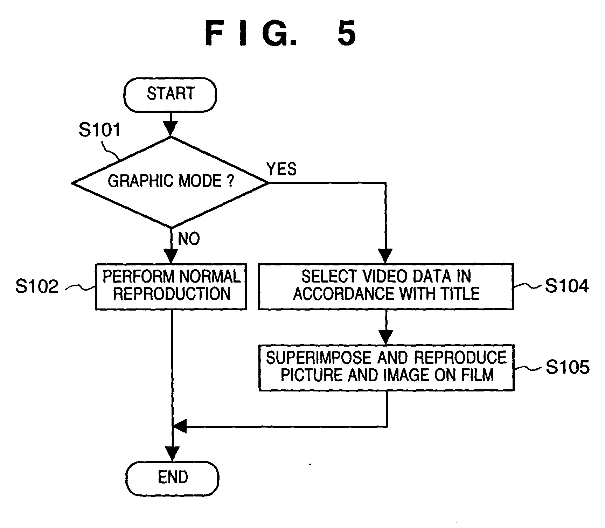

Read operation corresponding to each mode will be described next. A mode of selecting images to be synthesized into an image to be read in accordance with the title information magnetically recorded on a film will be described first with reference to the flow chart of Fig. 5.

In step S101, the microcomputer 20 checks whether the graphic mode is selected by the operation member 25. If NO in step S101, the flow advances to step S102 to perform normal reproduction. In this case, only the image data read from the film is output. If YES in step S101, the flow advances to step S104. The graphic mode is a mode of outputting the image data read from the film and the video data recorded in advance upon superimposing them on each other.

In step S104, video data corresponding to the title information contained in the magnetic information read in step S04 by the magnetic information read/write circuit 6 and the head unit 5 is selected from the frame memory 19. In step S105, the video data selected in step S104 is superimposed on the image data read from the film, and the resultant data is output.

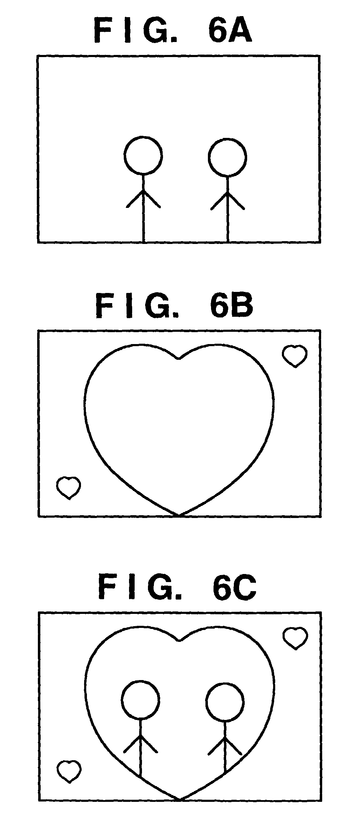

Figs. 6A to 6C show an example of the output image obtained by superimposing the data in the above manner. Fig. 6A shows the image read from the film. The title "I Love You" is recorded as magnetic information on the film in correspondence with this image. The image shown in Fig. 6B is selected in accordance with this title. The selected image is superimposed on the read image, and the resultant image is output, as shown in Fig. 6C.

This arrangement implements a new method of using titles that are recorded on a film to be printed on photographic prints. This provides an entertaining, convenient film image reproducing apparatus.

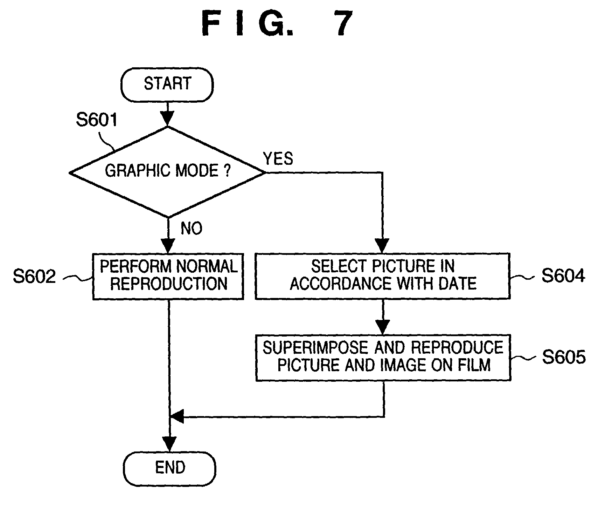

A mode of selecting images to be synthesized into an image to be read in accordance with the date information magnetically recorded on a film will be described next with reference to the flow chart of Fig. 7.

In step S601, the microcomputer 20 checks whether the graphic mode is selected by the operation member 25. If NO in step S601, the flow advances to step S602 to perform normal reproduction. In this case, only the image data read from the film is output. If YES in step S601, the flow advances to step S604.

In step S604, video data corresponding to the date information contained in the magnetic information read in step S304 by the magnetic information read/write circuit 6 and the head unit 5 is selected from the frame memory 19. In step S605, the video data selected in step S604 is superimposed on the image data read from the film, and the resultant data is output.

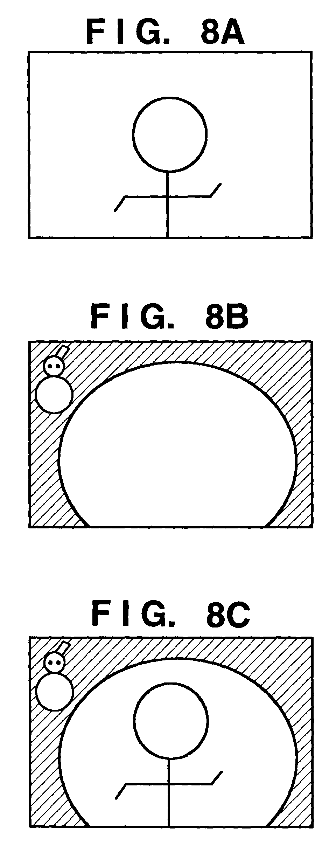

Figs. 8A to 8C show an example of the output image obtained by superimposing the data in the above manner. For example, information indicating that photographing operation was performed in February is recorded as magnetic information on the film in correspondence with this image. The image shown in Fig. 8B is selected in accordance with this date information. The selected image is superimposed on the read image, and the resultant image is output, as shown in Fig. 8C.

This arrangement allows the user to visually recognize the season in which photographing operation was done. This provides an entertaining, convenient film image reproducing apparatus.

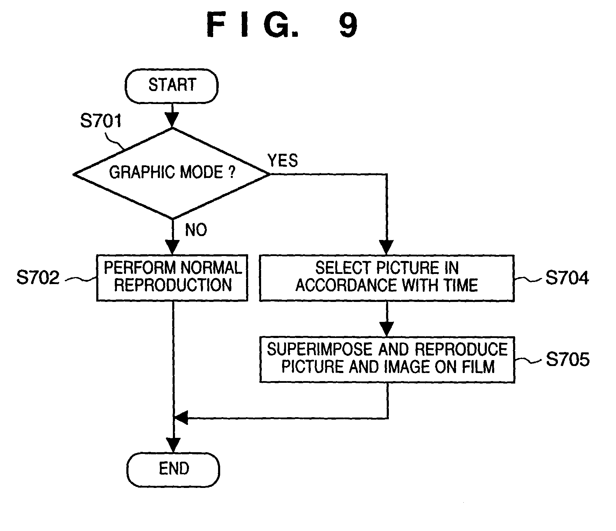

A mode of selecting images to be synthesized into an image to be read in accordance with the time information magnetically recorded on a film will be described next with reference to the flow chart of Fig. 9.

In step S701, the microcomputer 20 checks whether the graphic mode is selected by the operation member 25. If NO in step S701, the flow advances to step S702 to perform normal reproduction. In this case, only the image data read from the film is output. If YES in step S701, the flow advances to step S704.

In step S704, video data corresponding to the time information contained in the magnetic information read in step S304 by the magnetic information read/write circuit 6 and the head unit 5 is selected from the frame memory 19. In step S705, the selected video data is superimposed on the image data read from the film, and the resultant data is output.

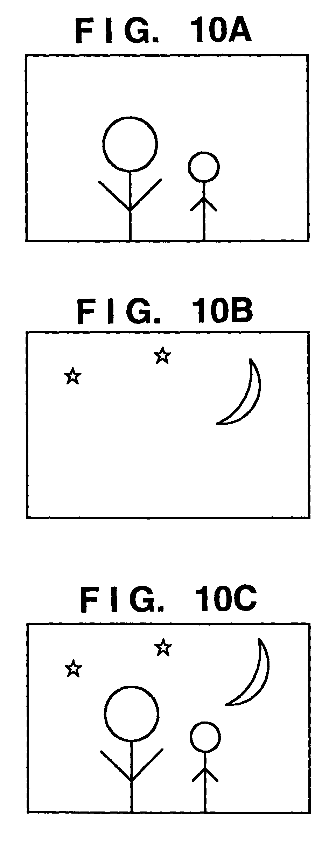

Figs. 10A to 10C show an example of the output image obtained by superimposing the data in this manner. Fig. 10A shows the image read from the film. Information indicating that photographing operation was performed at 9 p.m. is recorded as magnetic information on the film in correspondence with this image. The image shown in Fig. 10B is selected in accordance with this time information. The selected image is superimposed on the read image, and the resultant image is output, as shown in Fig. 10C.

With the above arrangement, the user can recognize the time zone to which the time of photography belongs, thereby providing an entertaining, convenient film image reproducing apparatus.

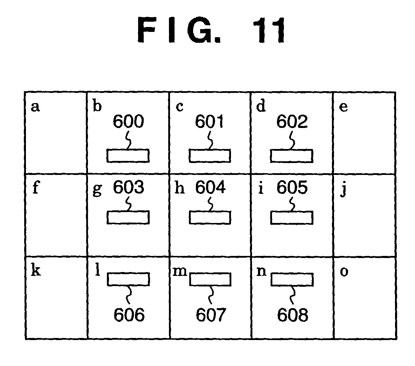

An example of how automatic zooming reproduction is performed in accordance with the main object information (with size information) contained in read magnetic information will be described next. Fig. 11 explains an example of how the position and size of a main object are determined by using a distance measuring point/photometric area chart for the camera. In this case, a 15-division photometric system will be exemplified. Reference symbols a to o denote photometric areas. Reference numerals 600 to 608 denote distance measuring points. In this case, there are nine distance measuring points.

Assume that the distance measuring point 604 is an in-focus point, and all the areas, of the photometric areas b, c, d, g, i, l, m, and n around the photometric area h near the in-focus point 604, in which the absolute values of differences in photometric value with respect to the photometric area h fall within a predetermined value are regarded as main object areas. In addition, all the areas, of the photometric areas around a photometric area determined as a main object area, in which the absolute values of differences in photometric value with respect to the photometric area h fall within a predetermined value are regarded as main object areas. The above operation is repeated.

For example, the distance measuring points 603 and 606 are in-focus points, and the average value of the photometric values in the photometric areas g and l near the in-focus points is compared with the photometric value in each of the photometric areas a, b, c, f, h, k, and m. If the absolute value of the difference falls within a predetermined value, the corresponding area is regarded as a main object area, in addition to the photometric areas g and l in which the in-focus points are present. Main object area determination is performed outward from each area determined as a main object area as in the above case. That is, a main object area is expanded from an in-focus point on the basis of the photometric values to determine one continuous main object.

The camera then determines and selects one of the main object position/size data patterns which is closet to the main object position/size, and records it as magnetic information.

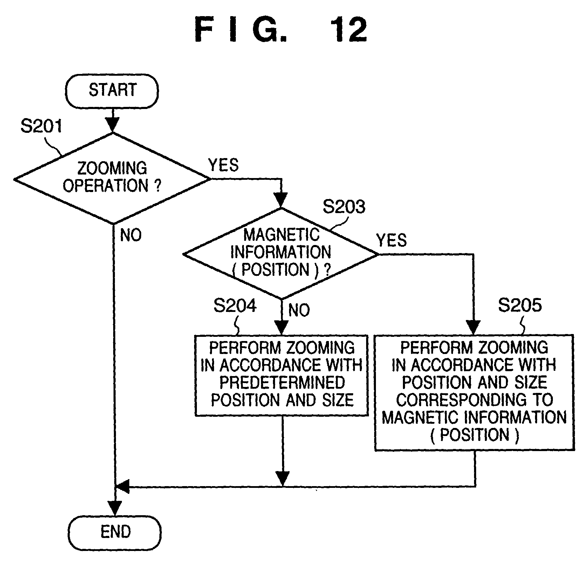

Reproducing operation will be described with reference to the flow chart of Fig. 12.

In step S201, the microcomputer 20 determines whether to perform zooming in reproducing operation. If NO in step S201, the operation is terminated; otherwise, the flow advances to step S203. In this case, zooming is executed when zooming is programmed in slide show reproduction, or executed in accordance with user's setting.

In step S203, the microcomputer 20 checks whether main object position (size) information is contained in the magnetic information read in step S304. If NO in step S203, the flow advances to step S204. If YES in step S203, the flow advances to step S205. In step S204, zooming is executed in accordance with a predetermined position and size. In step S205, zooming is executed in accordance with the zooming position and magnification determined on the basis of the main object position (size) information contained in the magnetic information. For example, the main object is zoomed up in the center of the screen to be fitted in 95% of the screen area.

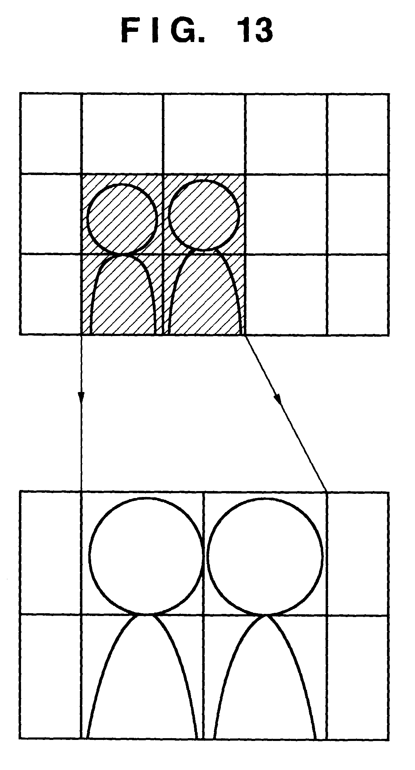

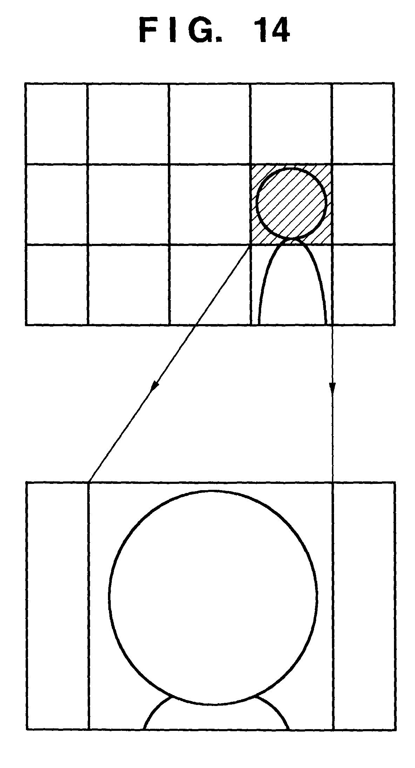

Figs. 13 and 14 show the images reproduced in the above-described manner. Fig. 13 shows a case in which the photometric areas g, h, l and m are recognized as main object areas. Fig. 14 shows a case in which only the photometric area i is recognized as a main object area. In these cases, photometric area division and division/grouping of the main object position (size) information in magnetic information are performed in the same manner. In practice, however, these operations may be performed in different manners. With this arrangement, automatic zooming can be properly performed.

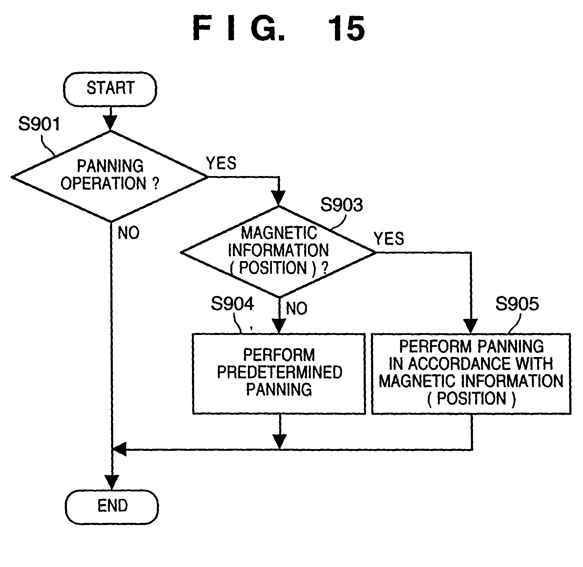

An example of how automatic panning reproduction is performed in accordance with main object position (size) information in magnetic information will be described next with reference to the flow chart of Fig. 15.

First of all, in step S901, the microcomputer 20 determines whether to perform panning in reproducing operation. If NO in step S901, the operation is terminated. If YES in step S901, the flow advances to step S903. In this case, panning is executed when panning is programmed in slide show reproduction, or is executed in accordance with user's setting.

In step S903, the microcomputer 20 checks whether main object position (size) information is contained in the magnetic information read in step S304. If NO in step S903, the flow advances to step S904. If YES in step S903, the flow advances to step S905. In step S904, panning is performed in accordance with a predetermined position and size. In step S905, panning is performed in accordance with the panning position determined on the basis of the main object position (size) information contained in the magnetic information. For example, panning is performed such that the main object is always present at the end position of panning, or the main object stays within the screen during panning.

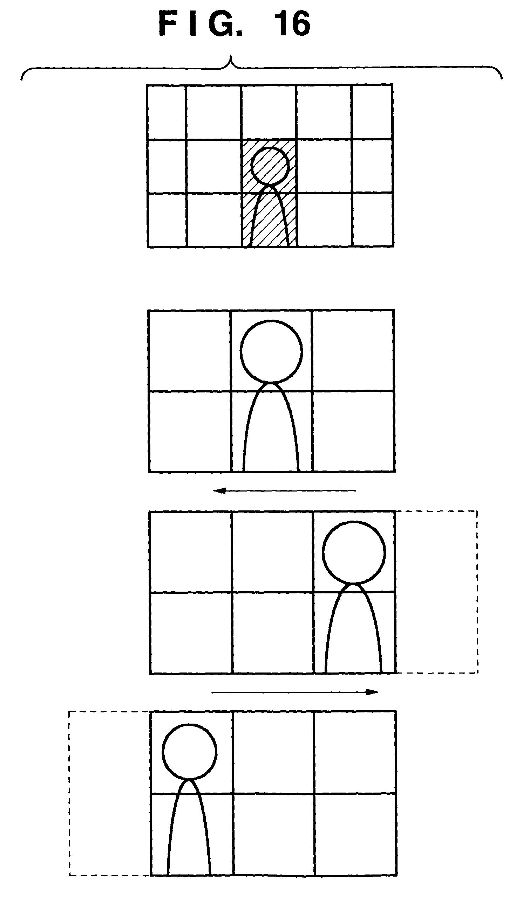

Fig. 16 shows how an image is reproduced in this manner. In this case, the photometric areas h and m are recognized as main object areas, and the main object stays within the screen during panning. In this case, photometric area division and division/grouping of the main object position (size) information in magnetic information are performed in the same manner. In practice, however, these operations may be performed in different manners. With this arrangement, automatic panning can be properly performed.

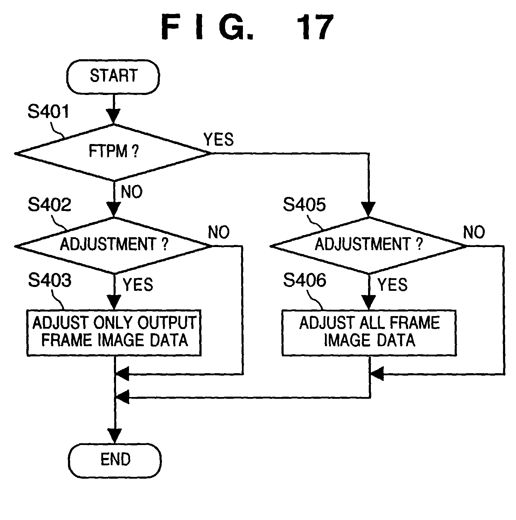

A mode in which when FTPM (Fixed Time Printing Mode) information is contained in the magnetic information read from a film, and color adjustment and brightness adjustment are performed for image data read from the film with given adjustment amounts, color adjustment and brightness adjustment are performed for all frames with the given adjustment amounts will be described next with reference to the flow chart of Fig. 17.

In step S401, the microcomputer 20 checks whether FTPM is set in the magnetic information read in step S304. If YES in step S401, the flow advances to step S405. If NO in step S401, the flow advances to step S402. In step S402, the microcomputer 20 checks whether brightness adjustment and color adjustment have been performed for output image data by the operation member 25. If NO in step S402, the operation is terminated. If YES in step S402, the flow advances to step S403 to correct the color and brightness of only the output frame image data.

In step S405, the microcomputer 20 checks whether brightness adjustment and color adjustment have been manually performed for the output image data by using the operation member 25. If NO in step S405, the operation is terminated. If YES in step S405, the flow advances to step S406 to perform color adjustment and brightness adjustment for all the image data.

With this arrangement, when film image data with the FTPM information intentionally set by the photographer are to be reproduced on a monitor such as a TV set, the images intended by the photographer can be accurately reproduced even if color adjustment and brightness adjustment are manually performed.

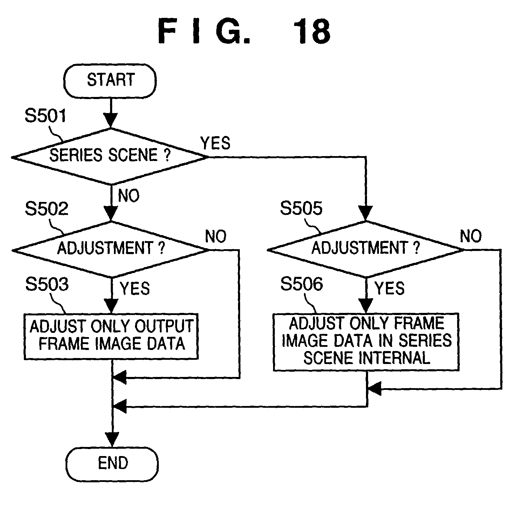

A mode in which when series scene information is contained in the magnetic information read from a film, and color adjustment and brightness adjustment are performed for image data read from the film with given adjustment amounts, color adjustment and brightness adjustment are performed for all frames with the given adjustment amounts will be described next with reference to the flow chart of Fig. 18.

In step S501, the microcomputer 20 checks whether series scene information is set in the magnetic information read in step S304. If YES in step S501, the flow advances to step S505. If NO in step S501, the flow advances to step S502. In step S502, the microcomputer 20 checks whether brightness adjustment and color adjustment have been manually performed for output image data by using the operation member 25. If NO in step S502, the operation is terminated. If YES in step S502, the flow advances to step S503 to correct the color and brightness of only the output frame image data.

In step S505, the microcomputer 20 checks whether brightness adjustment and color adjustment have been manually performed for the output image data by using the operation member 25. If NO in step S505, the operation is terminated. If YES in step S505, the flow advances to step S506 to perform color adjustment and brightness adjustment for all the image data.

With this arrangement, when the film images set in the series scene setting interval intentionally set by the photographer are to be reproduced on a monitor such as a TV set, the image intended by the photographer can be accurately reproduced even if color adjustment and brightness adjustment are manually performed.

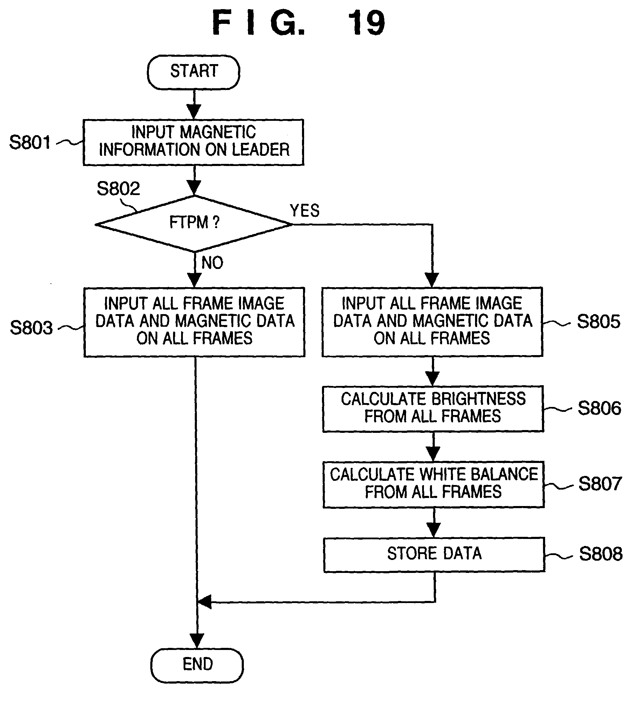

A mode of performing color adjustment and brightness adjustment by using all the image data read from a film when FTPM information is contained in read magnetic information will be described next with reference to the flow chart of Fig. 19.

In step S801, the microcomputer 20 reads magnetic information from the leader of the film by using the feed driving circuit 4 and the magnetic information read/write circuit 6. The flow then advances to step S802 to check whether FTPM information is contained in the information read in step S801. If YES in step S802, the flow advances to step S805. If NO in step S802, the flow advances to step S803.

In step S803, the microcomputer 20 loads image data for an index window while reading magnetic information on all the frames. In step S806, the microcomputer 20 calculates/determines a brightness adjustment value common to all the frames on the basis of the brightness determination information of all the frames which are read in step S805. In step S807, the microcomputer 20 calculates/determines a color adjustment amount common to all the frames on the basis of the white balance determination information of all the frames which are read in step S805.

In step S808, the microcomputer 20 stores the brightness adjustment value determined in step S806 and the color adjustment value determined in step S807. With this arrangement, the FTPM (Fixed Time Printing Mode) information set for photographic printing paper print operation by the photographer is used for the film image reproducing apparatus, so that the images intended by the photographer can be checked on a monitor such as a TV set.

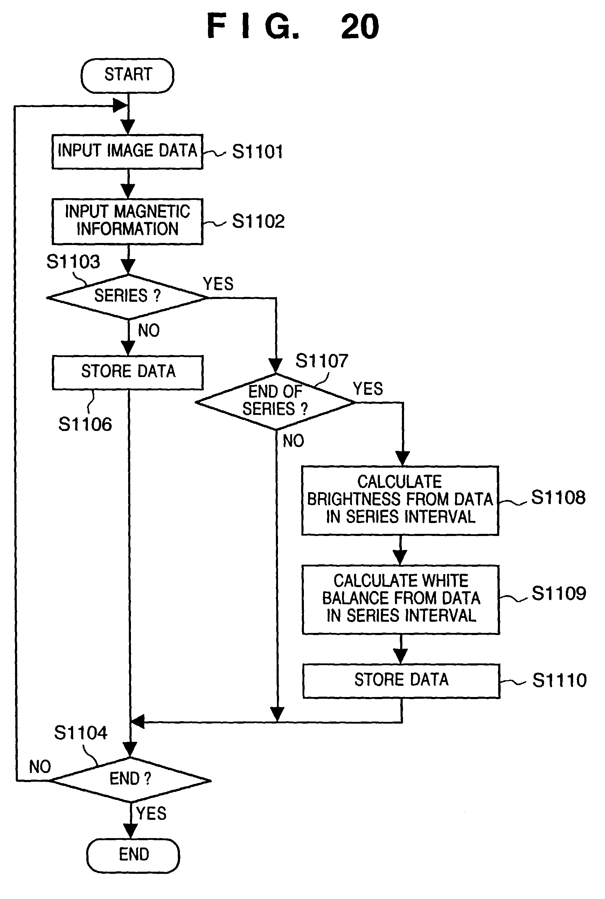

When series scene information is contained in read magnetic information, color adjustment and brightness adjustment are determined by using the image data in a series scene interval which is read from the film. When no series scene information is contained in the magnetic information, color adjustment and brightness adjustment are performed by using only the image data read from the film. This operation will be described next with reference to the flow chart of Fig. 20.

In step S1101, the microcomputer 20 opens the cover of the film cartridge to feed the film by using the feed driving circuit 4, and reads the image data on each frame by using the CCD 11. In step S1102, the microcomputer 20 reads the magnetic information on each frame by using the magnetic information read/write circuit 6. In step S1103, the microcomputer 20 checks whether series scene information is contained in the magnetic information read in step S1102. If NO in step S1103, the flow advances to step S1106. If YES in step S1103, the flow advances to step S1107.

In step S1106, the microcomputer 20 stores the brightness adjustment determination information and color adjustment determination information of the read image data. In step S1104, the microcomputer 20 checks whether data are read from all the frames. If YES in step S1104, the operation is terminated. If NO in step S1104, the flow returns to step S1101 to read data from the next frame.

In step S1107, the microcomputer 20 checks whether no series scene information is left, and the series scene interval has ended. If NO in step S1107, the flow advances to step S1104. If YES in step S1107, the flow advances to step S1108 to calculate, determine, and store a brightness adjustment value in the series scene interval. In step S1109, the microcomputer 20 calculate, determine, and store a color adjustment value in the series scene interval. In step S1110, the microcomputer 20 stores the brightness adjustment value and the color adjustment value determined in steps S1108 and S1109.

As described above, when a film contains series scene information, adjustment is performed by using brightness adjustment values and color adjustment values from all the image data in the series scene interval. Therefore, the series scene (FTPM within designated range) information set for photograph printing paper print operation by the photographer is also used for the film image reproducing apparatus. This allows the photographer to check the images intended by the photographer on a monitor such as a TV set.

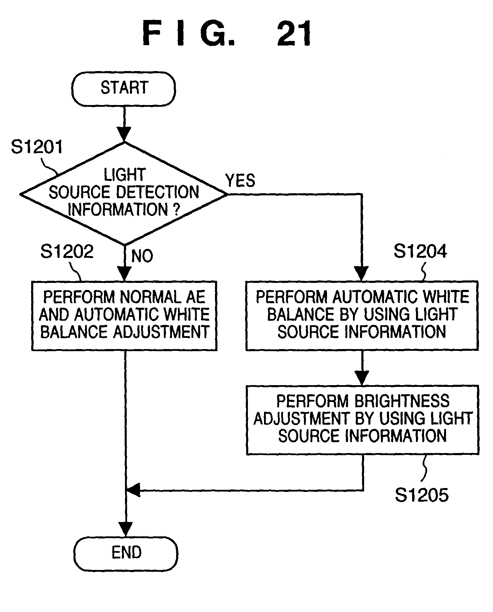

When light source information set in photographing operation is contained in the magnetic information read from a film, the information is used for color adjustment and brightness information for the image data read from the film. This operation will be described next with reference to Fig. 21.

In step S1201, the microcomputer 20 checks whether light source detection information set in photographing operation is contained in the loaded magnetic information. If NO in step S1201, the flow advances to step S1202. If YES in step S1201, the flow advances to step S1204. In step S1202, the microcomputer 20 determines a brightness adjustment amount and a white balance amount by using the brightness information and the color adjustment information contained in the magnetic information, and outputs the image data obtained by performing correction on the basis of the determined amounts.

In step S1204, the microcomputer 20 determines a white balance amount by using the image color adjustment information and the light source detection information contained in the magnetic information, and outputs the corrected film image data. More specifically, when photographing operation is performed under a fluorescent light source, the adjustment range is expanded to eliminate a green fog. When photographing operation is performed under tungsten light, a white balance amount is set to maintain the atmosphere of the light source.

In step S1205, the microcomputer 20 determines a brightness adjustment amount by using the loaded brightness adjustment information and light source detection information, and outputs the corrected film image data. That is, when photographing operation is performed under a fluorescent light source, a relatively large brightness adjustment amount is set to make the green fog less noticeable. When photographing operation is performed under tungsten light, a relatively small brightness adjustment amount is set to maintain the atmosphere of the light source.

With this arrangement, images with good color balance can be enjoyed on a monitor such as a TV set by using light source information for photographic printing paper print operation.

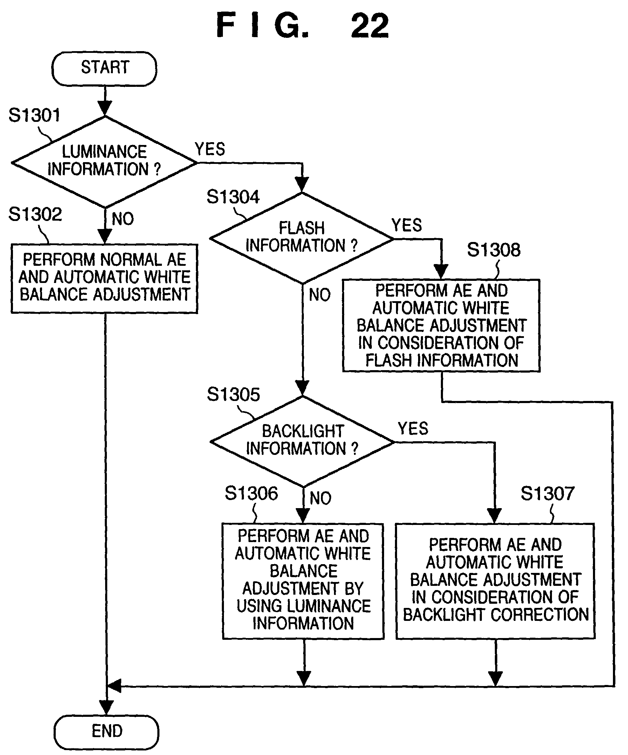

When luminance information, flash information, or backlight detection information set in photographing operation is contained in the magnetic information read from a film, this information is used for color adjustment or brightness adjustment for the image data read from the film. This operation will be described next with reference to the flow chart of Fig. 22.

In step S1301, the microcomputer 20 checks whether luminance information is contained in the loaded magnetic information. If NO in step S1301, the flow advances to step S1302. If YES in step S1301, the flow advances to step S1304. In step S1302, the microcomputer 20 determines a brightness adjustment amount and a white balance amount by using the brightness adjustment information and color adjustment information of the loaded image data, and outputs film image data on the basis of the determined amounts.

In step S1304, the microcomputer 20 checks whether flash information is contained in the loaded magnetic information. If NO in step S1304, the flow advances to step S1305. If YES in step S1304, the flow advances to step S1308. In step S1305, the microcomputer 20 checks whether backlight detection information is contained in the loaded magnetic information. If NO in step S1305, the flow advances to step S1306. If YES in step S1305, the flow advances to step S1307.

In step S1306, the microcomputer 20 determines a white balance amount and a brightness adjustment amount by using the color adjustment information and luminance information of the loaded image data, and outputs film image data on the basis of the determined amounts. That is, simple determination such as determination as to whether photographing operation is performed indoors or outdoors can be easily performed on the basis of brightness information. This allow more accurate white balance control.

In step S1307, the microcomputer 20 determines a white balance amount and a brightness adjustment amount by using the loaded color adjustment information, luminance information, and backlight detection information, and outputs film image data on the basis of the determined amounts. That is, when luminance is high, and backlight correction is performed, the information about a very bright area is neglected. With this arrangement, a film having undergone backlight correction is read by the CCD to prevent the output image data from becoming image data before backlight correction.

In step S1308, the microcomputer 20 determines a white balance amount and a brightness adjustment amount by using the loaded color adjustment information, luminance information, and flash information, and outputs film image data on the basis of the determined amounts. That is, this operation prevents overexposure of the object image when only the information of bright portions is used in photographing operation using a flash in a dark place.

With this arrangement, a film image reproducing apparatus capable of reproducing a main object image more faithfully can be realized.

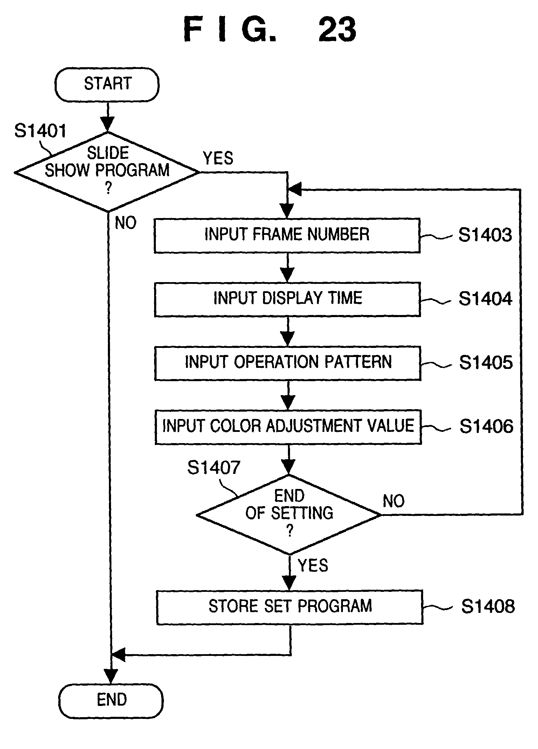

Another operation will be described next with reference to the flow chart of Fig. 23. In this case, a manual color adjustment value for each frame which is based on a monitor image can be recorded as programmed reproduction data, in addition to reproduction order/time/operation (zooming, panning, and the like) data on programmed reproduction images. Each frame set at the time of reproduction is output with the corresponding stored color adjustment value.

In step S1401, the microcomputer 20 checks whether the slide show mode has been programmed by the operation member 25. If YES in step S1401, the flow advances to step S1403. If NO in step S1401, the operation is terminated. In step S1403, each setting in slide show programmed reproduction is started, and a specific frame to be reproduced is set. As a result, the set film image is displayed.

In step S1404, the microcomputer 20 sets the duration of reproduction in seconds for the set frame. In step S1405, the microcomputer 20 sets a display operation pattern, e.g., displaying the reproduction frame set in step S1403 while panning it, displaying the frame while zooming it, or displaying the frame while rotating it. In this case, the microcomputer 20 sets a switching pattern (e.g., wipe/overlap).

In step S1406, the user performs desired color adjustment while seeing the image set/displayed in step S1403. If no correction is to be made, the automatic adjustment value of the currently displayed image which is determined by the apparatus. In step S1407, it is checked whether the next frame is set with the operation member 25 or the setting operation is terminated. If the setting operation is to be continued, the flow returns to step S1403. If the setting operation is to be terminated, the flow advances to step S1408 to store the contents set up to the present.

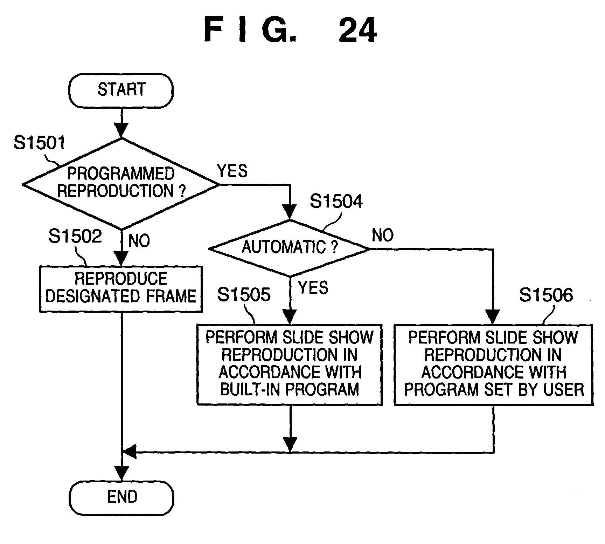

The reproducing operation based on the program set in Fig. 23 will be described next with reference to the flow chart of Fig. 24.

In step S1501, the microcomputer 20 checks whether slide show reproduction is set by the operation member 25. If NO in step S1501, the flow advances to step S1502 to reproduce a designated frame. If YES in step S1501, the flow advances to step S1504 to perform a slide show. In step S1504, the microcomputer 20 checks whether automatic slide show reproduction is set by the operation member 25 or is to be performed in accordance with the program stored by the user. If automatic slide show reproduction is to be performed, the flow advances to step S1505. Otherwise, the flow advances to step S1506.

In step S1505, slide show reproduction is performed in accordance with the contents of the program stored in the apparatus. In step S1506, slide show reproduction is performed in accordance with the program previously set by the user. With this arrangement, slide show reproduction can be performed with the color reproduction expressed by the photographer.

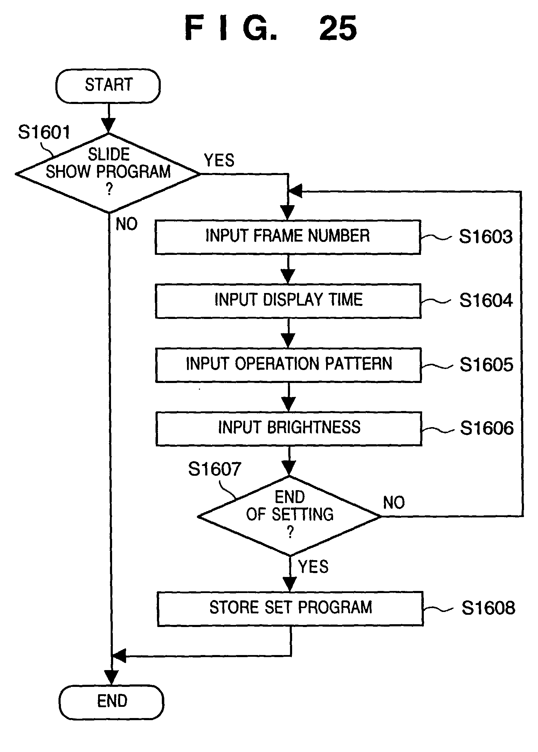

Still another operation will be described next with reference to the flow chart of Fig. 25. In this case, a manual brightness adjustment value for each frame which is based on a monitor image can be recorded as programmed reproduction data, in addition to reproduction order/time/operation (zooming, panning, and the like) data on programmed reproduction images. Each frame set at the time of reproduction is output with the corresponding stored brightness adjustment value.

In step S1601, the microcomputer 20 checks whether the slide show mode has been programmed by the operation member 25. If YES in step S1601, the flow advances to step S1603. If NO in step S1601, the operation is terminated. In step S1603, each setting in slide show programmed reproduction is started, and a specific frame to be reproduced first is set. As a result, the set film image is displayed.

In step S1604, the microcomputer 20 sets the duration of reproduction in seconds for the set frame. In step S1605, the microcomputer 20 sets a display operation pattern, e.g., displaying the reproduction frame set in step S1603 while panning it, displaying the frame while zooming it, or displaying the frame while rotating it. In this case, the microcomputer 20 sets a switching pattern (e.g., wipe/overlap).

In step S1606, the user performs desired brightness adjustment while seeing the image set/displayed in step S1603. If no correction is to be made, the automatic adjustment value of the currently displayed image which is determined by the apparatus. In step S1607, it is checked whether the next frame is set with the operation member 25 or the setting operation is terminated. If the setting operation is to be continued, the flow returns to step S1603. If the setting operation is to be terminated, the flow advances to step S1608 to store the contents set up to the present.

The slide show reproduction based on the contents set in this manner is executed in accordance with a flow chart similar to the one shown in Fig. 24. With this arrangement, slide show reproduction can be performed with the brightness reproduction expressed by the photographer.

### (Second Embodiment)

In this embodiment, a slide show (continuous) reproduction program for presenting the atmospheres of the titles that have been programmed is automatically selected in accordance with an overall frame title (the title of all the frames) magnetically recorded on the leader (distal end) of the film.

Since the apparatus of the second embodiment has the same arrangement as that of the apparatus of the first embodiment in Fig. 1, a description thereof will be omitted.

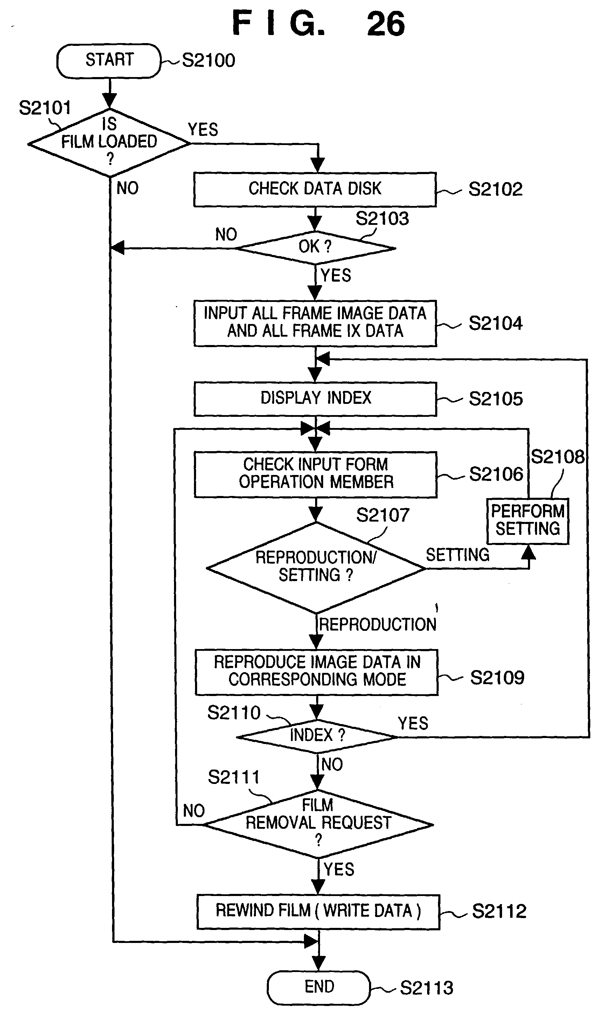

The basic operation of a film image read apparatus according to this embodiment will be described with reference to the flow chart of Fig. 26.

In step S2100, the operation is started.

In step S2101, it is checked whether an advanced photo system film (a film having a magnetic recording portion) having a magnetic recording portion is loaded into the apparatus. If NO in step S2101, the flow advances to step S2113. If YES in step S2101, the flow advances to step S2102 to perform reproducing operation.

In step S2102, a data disk b or a developed state indication tab a is checked to determine whether the film is a color negative film, a color slide positive film, a monochrome film, or a cleaning cartridge. This check is performed by using, for example, a switch or photoreflector (not shown).

If it is determined in step S2103, after the check processing in step S2102, that the film is an undeveloped film, reproducing operation is inhibited, and the flow advances to step S2113. If it is determined that the film is a developed film, the flow advances to step S2104.

In the step S2104, the cover of the film cartridge is opened to pull out the film by using a feed driving circuit 4, and the images of all the frames are read by using a CCD 11. At the same time, the magnetic data on all the frames are loaded by using a magnetic information read/write circuit 6. In this case, it suffices even if the image data read by the CCD 11 are coarse data, because they are used for an index window. For this reason, the image data are thinned out and stored a the frame memory 19. In this case, a dedicated area for storing the index window data is ensured in the frame memory 19. Ensuring such a dedicated area obviates the necessity to read the images of all the frames every time an index window is to be displayed.

In step S2105, the image data loaded in step S2104 is output as an index image to a video amplifier 16. Fig. 4 shows an example of the index image. In step S2106, an input from an operation member 25 is checked.

If setting operation is determined in step S2107 after the check processing in step S2106, the flow advances to step S2108. If reproducing operation is determined, the flow advances to step S2109.

In step S2108, each setting is performed in accordance with the input from the operation member 25.

In step S2109, image data is loaded from the CCD 11, and the reproducing modes are switched in accordance with a change of the operation member. For example, an automatic reproduction mode using title information (overall frame title/title of each frame) and date information, a mode of reproducing frames one by one, and the like are switched. In the frame-by-frame reproduction mode, frame feed is performed. If "skip" is set for a given frame, this frame is skipped without being reproduced. An index window display request is checked in step S2110. In this step, the photography data display title or title display data of magnetically recorded information (IX data) is displayed in accordance with a request, and display switching is performed in accordance with "skip", a change in orientation, and a change in aspect ratio.

In step S2110, it is checked whether an index window display request is generated. If YES in step S2110, the flow returns to step S2105 to display an index window. If NO in step S2110, the flow advances to step S2111.

In step S2111, it is checked whether a film removal request is generated. If NO in step S2111, the flow returns to step S2106. If YES in step S2111, the flow advances to step S2112 to rewind the film.

In step S2112, the film is rewound by using the feed driving circuit 4, the position of the data disk 6 is set to the "developed" position, and the cover of the cartridge is closed, thereby allowing removal of the film. In addition, magnetic information is recorded on the film by using the magnetic information read/write circuit 6 and the head unit 5, as needed, while the film is rewound.

In step S2113, the operation is terminated.

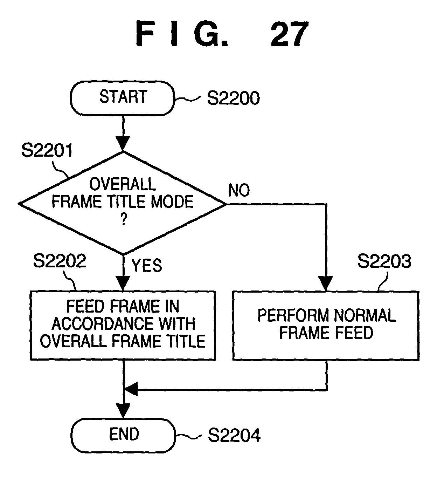

A characteristic feature of this embodiment will be described next with reference to the flow chart of Fig. 27.

Fig. 27 is a flow chart showing the operation of the second embodiment. This operation corresponds to the processing in step S2109 in Fig. 26.

In step S2200, the operation is started. In step S2201, it is checked whether the automatic slide show reproduction mode using overall frame title information is selected as a reproduction mode. If YES in step S2201, the flow advances to step S2202. If NO in step S2201, the flow advances to step S2203.

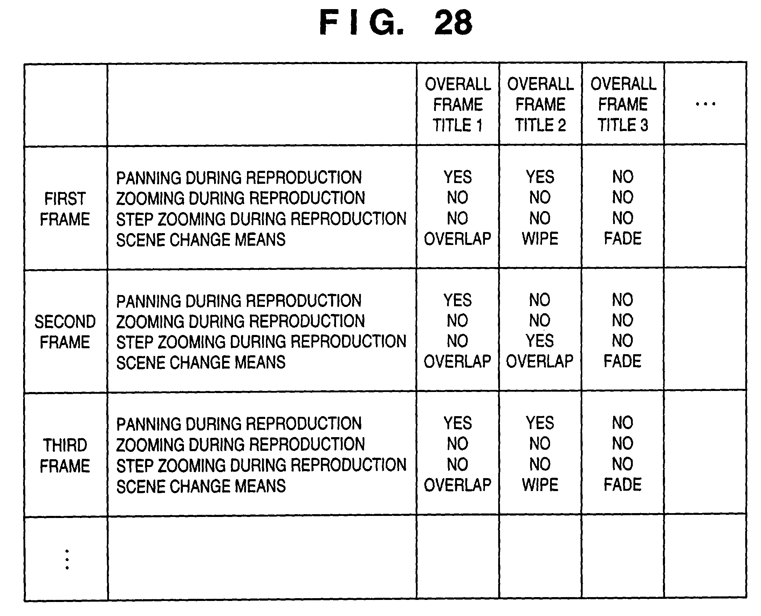

In step S2202, slide show reproduction is performed by using a program corresponding to the overall frame title information read in step S2104. For example, as shown in Fig. 28, slide show reproduction is performed while a special image effect is produced on each frame during reproduction or scene changing (frame switching) operation is performed on the basis of a predetermined table stored in advance in correspondence with titles. The table stored in this case, like the one shown in Fig. 28, is designed to produce the atmosphere of each title. For example, title 3 is "memory" or the like, and a program is created on the basis of the "fade-out" effect. For example, overall frame title 1 is "athletic meet", and overall frame title 2 is "entrance ceremony at kindergarten", "entrance ceremony at school", "commencement", or the like.

In step S2203, frames are reproduced one by one at predetermined intervals without producing any special image effect.

In step S2204, the operation is terminated.

As described above, in this embodiment, by producing a predetermined image effect in accordance with an overall frame title, an optimal programmed reproduction mode for the contents of photography can be automatically executed, while compatibility with APS devices is maintained, without changing the format of an advanced photo system film and magnetically recording the contents of the slide show program.

### (Third Embodiment)

In this embodiment, an image effect (to be simply referred to as an effect hereinafter) for each frame and scene changing (frame switching) operation which are suited for each title set in advance are automatically selected in accordance with the title information of each frame which is recorded on the magnetic recording portion of each frame on a film. Note that the apparatus of the third embodiment has the same arrangement as that of the second embodiment.

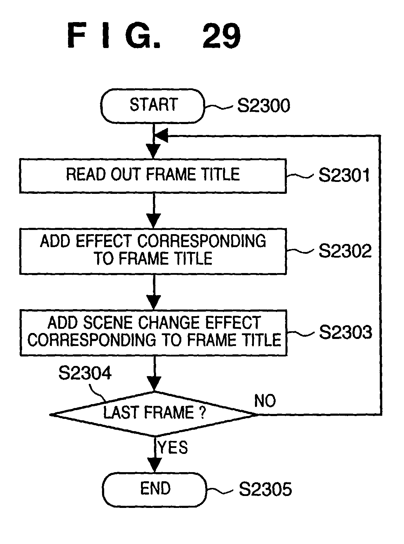

A characteristic feature of this embodiment will be described below with reference to the flow chart of Fig. 29.

Fig. 29 is a flow chart showing the operation of the second embodiment. This operation corresponds to the processing in step S2109 in Fig. 26.

In step S2300, the operation is started.

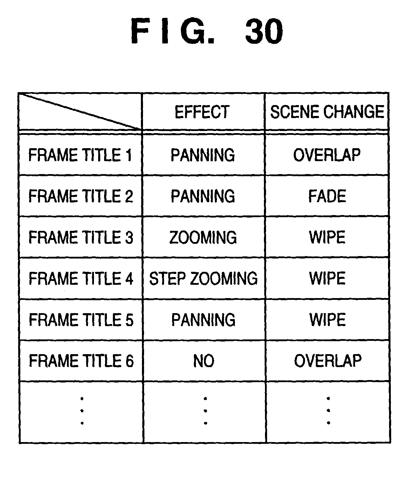

In step S2301, an effect and a scene change effect are determined by referring to the table shown in Fig. 30 in accordance with the frame title information (of the image to be reproduced) of the magnetic information loaded in step S2104. In this case, as the effect during reproduction and the scene change effect, data expressing the image of the title are set in advance.

In step S2302, the image is displayed for a predetermined period of time with the effect determined in step S2301 by using a memory controller 18. Thereafter, the flow advances to step S2303.

In step S2303, the current frame is switched to the next frame with the scene change effect determined in step S2301 by using the memory controller 18.

In step S2304, it is checked whether the last frame is reproduced. If YES in step S2304, the flow advances to step S2305 to terminate the slide show. If NO in step S2304, the flow returns to step S2301 to reproduce the next frame.

As described above, in this embodiment, with the above processing, an optimal effect and scene change effect for the contents of photography can be automatically produced, while compatibility with APS devices is maintained, without changing the format of an advanced photo system film and magnetically recording the contents of the slide show program.

### (Fourth Embodiment)

In this embodiment, when no title information is set for each frame, a title for each frame is automatically selected in accordance with the date information of each frame, and an effect and a scene change effect suited for each selected title are automatically selected. Note that the apparatus of the fourth embodiment has the same arrangement as that of the second embodiment.

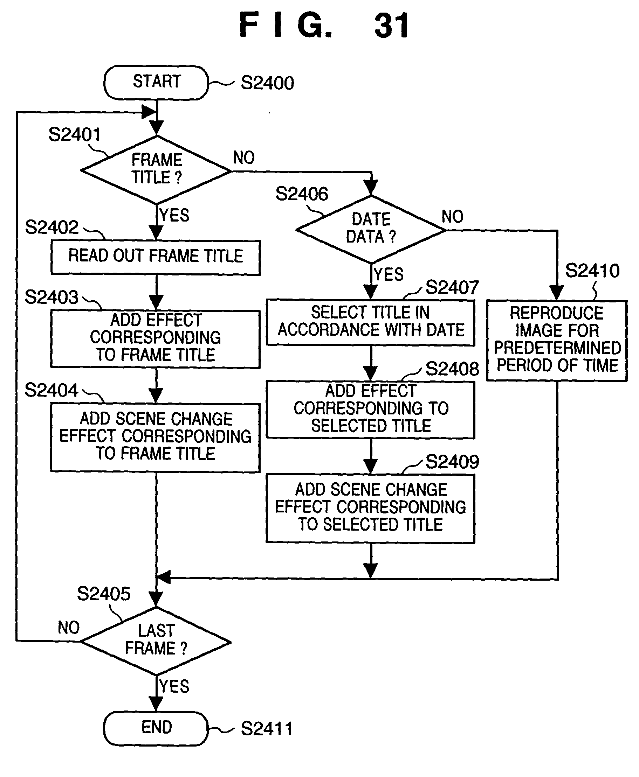

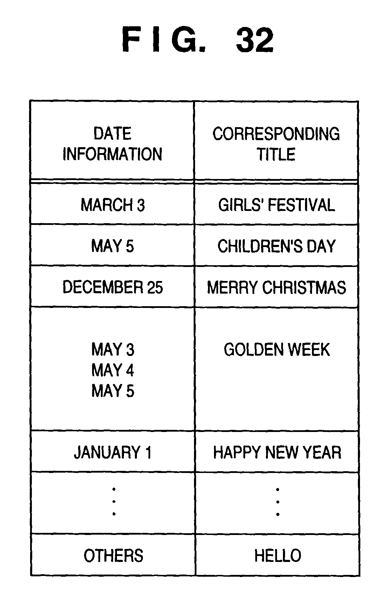

A characteristic feature of this embodiment will be described below with reference to the flow chart of Fig. 31 and the table of Fig. 32.

Fig. 31 is a flow chart showing the operation of the fourth embodiment. This operation corresponds to the processing in step S2109 in Fig. 26.

In step S2400, the operation is started.

In step S2401, it is checked whether title information for the frame to be reproduced is contained in the magnetic information loaded in step S2104 in Fig. 26. If YES in step S2401, the flow advances to step S2402. If NO in step S2401, the flow advances to step S2406.

In step S2402, an effect and a scene change effect are determined by referring to the table in Fig. 30 in accordance with the title information (of the frame to be reproduced) of the magnetic information loaded in step S2104 in Fig. 26. In this case, as the effect during reproduction and the scene change effect, data expressing the image of the title are set in advance.

In step S2403, the image is displayed for a predetermined period of time with the effect determined in step S2402 by using a memory controller 18. Thereafter, the flow advances to step S2404.

In step S2404, the current frame is switched to the next frame with the scene change effect determined in step S2402 by using the memory controller 18.

In step S2405, it is checked whether the last frame is reproduced. If YES in step S2405, the flow advances to step S2411 to terminate the slide show. If NO in step S2405, the flow returns to step S2401 to reproduce the next frame.

In step S2406, it is checked whether date information for the frame to be reproduced is contained in the magnetic information loaded in step S2104. If YES in step S2406, the flow advances to step S2407. If NO in step S2406, the flow advances to step S2410.

In step S2407, in accordance with the date information, a predetermined title associated with the date information is selected. Fig. 32 shows an example of the table used for this operation. As in the processing in step S2402, an effect and a scene change effect which correspond to the title information are determined on the basis of the selected title by referring to the table in Fig. 30. In this case, as the effect during reproduction and the scene change effect, data expressing the image of the title are set in advance.

In step S2408, the image is displayed for a predetermined period of time with the effect determined in step S2407 by using the memory controller 18. Thereafter, the flow advances to step S2409.

In step S2409, the current frame is switched to the next frame with the scene change effect determined in step S2407 by using the memory controller 18.

In step S2410, reproduction is performed without any special image effect and scene change effect for a predetermined period of time.

The operation is then terminated.

As described above, in this embodiment, by performing the above processing, a title is automatically selected for an image for which no frame title is magnetically recorded. For example, "Girls' Festival" is selected for an image with date information "March 3". In addition, an effect and a scene change effect are selected in accordance with the selected title. This allows the user to enjoy slide show reproduction more easily.

### (Fifth Embodiment)

In this embodiment, when no frame title is magnetically recorded, a frame effect and a scene change effect are fixed until a change in date is determined on the basis of date information. The apparatus of the fifth embodiment has the same arrangement as that of the second embodiment.

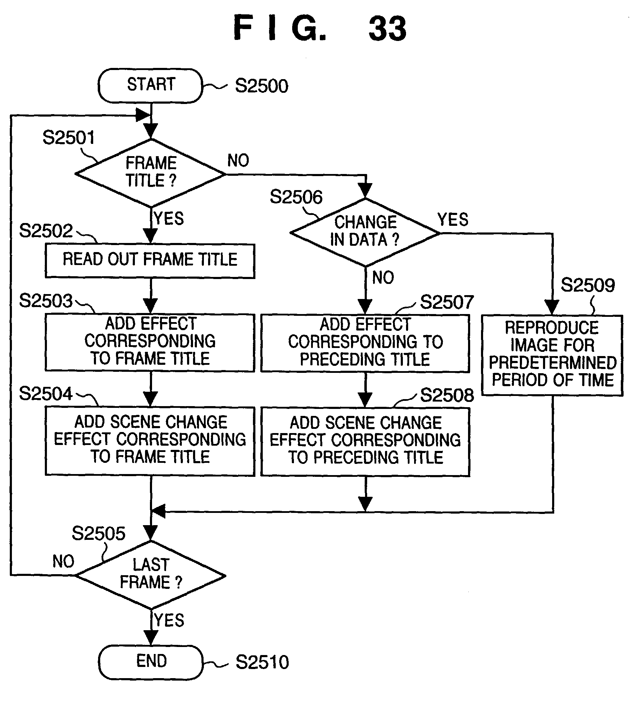

A characteristic feature of this embodiment will be described below with reference to the flow chart of Fig. 33.

Fig. 33 is a flow chart showing the operation of the fifth embodiment. This operation corresponds to the processing in step S2109 in Fig. 26.

In step S2500, the operation is started.

In step S2501, it is checked whether frame title information corresponding to the frame to be reproduced is contained in the magnetic information loaded in step S2104 in Fig. 26. If YES in step S2501, the flow advances to step S2502. If NO in step S2501, the flow advances to step S2506.

In step S2502, an effect and a scene change effect which correspond to the frame title information (corresponding to the image to be reproduced) of the magnetic information loaded in step S2104 are determined by referring to the table in Fig. 30. In this case, as the effect during reproduction and the scene change effect, data expressing the image of the title are set in advance.

In step S2503, the image is displayed for a predetermined period of time with the effect determined in step S2502 by using a memory controller 18. Thereafter, the flow advances to step S2504.

In step S2504, the current frame is switched to the next frame with the scene change effect determined in step S2502 by using the memory controller 18.

In step S2505, it is checked whether the last frame is reproduced. If YES in step S2505, the flow advances to step S2510 to terminate the slide show. If NO in step S2505, the flow returns to step S2501 to reproduce the next frame.

In step S2506, it is checked on the basis of the date information (corresponding to the frame to be reproduced) of the magnetic information loaded in step S2104 whether the date has changed with respect to the preceding frame. If NO in step S2506, the flow advances to step S2507. If YES in step S2506, the flow advances to step S2509.

In step S2507, the image is displayed for a predetermined period of time with the effect corresponding to the title that was present at the same date when determination was performed in step S2502 by using the memory controller 18. The flow then advances to step S2504.

In step S2508, the current frame is switched to the next frame with the scene change effect corresponding to the title that was present at the same date when determination was performed in step S2502 by using the memory controller 18.

In step S2509, reproduction is performed without any special image effect and scene change effect for a predetermined period of time.

The operation is then terminated.

As described above, in this embodiment, with the above processing, even if no frame title information is set, the user can still enjoy an automatic slide show. In addition, when a title is set for a special day, an effect corresponding to the title is produced, thereby automatically expressing the importance of the photograph.

### (Sixth Embodiment)

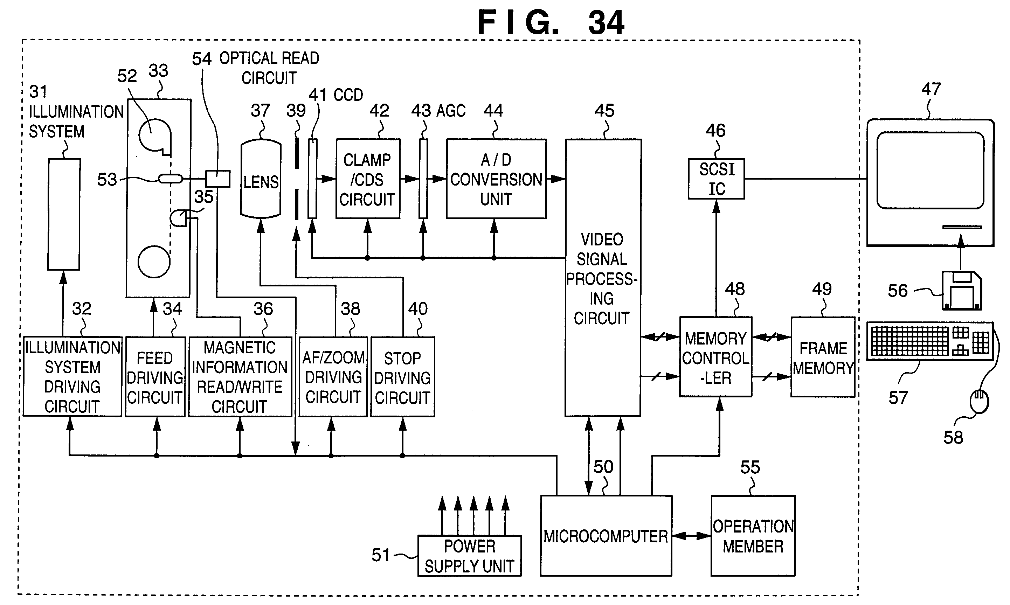

Fig. 34 shows a system for implementing the present invention by means of software for a personal computer.

Referring to Fig. 34, reference numeral 31 denotes an illumination system, which is located on the opposite side to a CCD 41 through a film and is turned on by an illumination system driving circuit 32 in accordance with an instruction from a microcomputer 50.

A feed driving circuit 34 is controlled by the microcomputer 50 to feed a developed film from a cartridge 52 to a predetermined position. This feeding position is controlled by detecting a perforation in the film using an optical detection element 53 and an optical read circuit 54.

A magnetic information read/write circuit 36 is controlled by the microcomputer 50 to read/write magnetic information from/on a fully exposed film by using a head unit 35.

As the image sensing element 41, a CCD or the like is used. The film image formed on this image sensing element through an optical lens 37 is photoelectrically converted to be extracted as an electrical signal.

A clamp/CDS circuit 42 and an AGC 43 perform basic analog signal processing for the signal before A/D conversion. The clamp level and the AGC reference level can be changed by the microcomputer 50.

An A/D conversion unit 44 converts the analog CCD output signal into a digital signal.

A video signal processing circuit 45 performs filtering, color conversion, and gamma/knee processing for the digital CCD image data, and outputs the resultant data to a memory controller 48. These functions are switched by data exchange with the microcomputer 50. Exposure information, focus information, white balance information, and auto-focus information for the CCD signal can be output to the microcomputer 50, as needed. The microcomputer 50 adjusts the white balance and gain of the signal on the basis of these pieces of information.

The memory controller 48 stores the digital image data input from the video signal processing circuit 45 in a frame memory 49, and sends the data to a SCSI-IC 46 to send it to a personal computer 47. In addition, the memory controller 48 receives the magnetic information read by the head unit 35 and the magnetic information read/write circuit 36 from the microcomputer 50, and stores the information in the frame memory 49. The memory controller 48 also sends the information to the SCSI-IC 46 to send it to the personal computer 47. These operations are performed in accordance with instructions from the microcomputer 50.

As the frame memory 59, a VRAM, an SRAM, a DRAM, an SDRAM, or the like is generally used.

A stop driving circuit 40 is constituted by, for example, an auto iris and the like, and serves to change the optical aperture value under the control of the microcomputer 50.

An AF (Auto Focus)/zoom driving circuit 38 includes, for example, a stepping motor, and forms an in-focus image on the film by changing the position and magnification of the focusing lens in the lens 37 under the control of the microcomputer 50.

A power supply unit 51 supplies necessary power to each IC and each driving system.

An operation member 55 transfers the state of operation member to the microcomputer 50. The microcomputer 50 controls the respective units in accordance with a change in the state of the operation member 55.

Reference numeral 56 denotes a medium storing software programs used to execute the above embodiments on the personal computer 47. By using the software programs, the operations of the first to fifth embodiments are performed on the basis of the image data sent from the SCSI-IC.

Reference numeral 57 denotes a keyboard unit 57 for operating the personal computer 47; and 58, a mouse unit for operating the personal computer 47.

The present invention is not limited to the arrangements of the above embodiments, and can employ any arrangements that can achieve the functions of the arrangements of the respective embodiments.

According to the image display system of each embodiment described above, one image read apparatus incorporates the additional information read means for reading at least one piece of additional information of the overall frame title information, the frame title information, and the frame date information, which are recorded on the film, the image read means for reading the image data recorded on the film, and the image effect addition means for adding a predetermined image effect to the film image read by the image read means in accordance with the additional information read by the additional information read means when the film image is to be displayed. However, the image display system of the present invention is not limited to this arrangement. For example, the present invention includes a system in which the respective means are housed in different cases, and the means are connected to each other through cables or the like.

For example, the image display apparatus of the present invention further includes a computer for receiving the additional information read by the additional information read means and the image read means and adding image effects by using the image effect addition means arranged in the apparatus.

As has been described above, according to the present invention, a proper image can be read out in accordance with the title information of the image recorded on an original, and the title information and the readout original image can be synthesized and output. Images can therefore be output in various forms.

In addition, the film images on a plurality of frames can be continuously and automatically reproduced while compatibility with other devices is maintained.

The present invention is not limited to the above embodiments and various changes and modifications can be made within the spirit and scope of the present invention. Therefore, to apprise the public of the scope of the present invention the following claims are made.

It is an object of this invention to allow a user to enjoy seeing images on a film which are reproduced on a TV set. To achieve this object, there is provided a film image reproducing apparatus including a unit for reading the images from the film, a unit for reading magnetic information on the film, and a unit capable of outputting signals that allow the images to be displayed on a monitor. This apparatus superimposes title information read from the magnetic information on a prepared image, and outputs the resultant image data.

## Claims

1. An image processing apparatus comprising:
image read means for reading an image on an original;
information read means for reading title information of the image recorded on the original;
storage means for storing a plurality of images; and
control means for performing control to read out a predetermined image from said storage means in accordance with the title information read by said information read means and synthesize/output the readout image and the image read from the original by said image read means.

2. The apparatus according to claim 1, wherein said storage means stores the plurality of images and the title information in correspondence with each other.

3. The apparatus according to claim 1 or 2, further comprising display means for displaying any one of the image read by said image read means, the image read out from said storage means, and the synthetic image.

4. The apparatus according to any one of claims 1 to 3, wherein the original is a film original.

5. The apparatus according to claim 4, wherein the title information is magnetically recorded on the film original.

6. An image processing method comprising the steps of:
reading an image on an original;
reading title information of the image recorded on the original;
reading out a predetermined image from storage means in accordance with the title information read in the information read step; and
synthesizing and outputting the readout image and the image read from the original in the image read step.

7. A storage medium storing the image processing method defined by claim 6 as a program.

8. A film image display system comprising:
additional information read means for reading at least one additional information from overall frame title information, frame title information, and frame date information which are recorded on a film;
image read means for reading an image recorded on the film; and
image effect addition means for adding a predetermined image effect in accordance with the additional information read by said additional information read means when the film image read by said image read means is to be displayed.

9. The system according to claim 8, wherein said image effect addition means adds a predetermined image effect to a film image on each frame.

10. The system according to claim 8, wherein said image effect addition means adds a predetermined image effect when a film image on each frame is to be switched to a film image on a next frame.

11. A film image display method comprising:
the additional information read step of reading at least one additional information from overall frame title information, frame title information, and frame date information which are recorded on a film;
the image read step of reading an image recorded on the film; and
the image effect addition step of adding a predetermined image effect in accordance with the additional information read in the additional information read step when the film image read in the image read step is to be displayed.

12. The method according to claim 11, wherein the image effect addition step comprises adding a predetermined image effect to a film image on each frame.

13. The method according to claim 11, wherein the image effect addition step comprises adding a predetermined image effect when a film image on each frame is switched to a film image on a next frame.

14. A storage medium storing the image display method defined by any one of claims 11 to 13 as a program.

15. A film image display apparatus comprising:
additional information input means for reading and inputting at least one additional information from overall frame title information, frame title information, and frame date information which are recorded on a film;
image input means for reading and inputting an image recorded on the film; and
image effect addition means for adding a predetermined image effect in accordance with the additional information input by said additional information input means when the film image input by said image input means is to be displayed.

16. The system according to claim 15, wherein said image effect addition means adds a predetermined image effect to a film image on each frame.

17. The system according to claim 15, wherein said image effect addition means adds a predetermined image effect when a film image on each frame is to be switched to a film image on a next frame.

18. A film image read apparatus comprising:
information read means for reading title information and date information of each frame which are recorded on a film;
image read means for reading a film image on each frame;
image effect addition means for adding a plurality of types of image effects to the read film images on the respective frames;
output means for continuously outputting the read film images on the respective frames to a monitor;
switching image effect addition means for adding a plurality of types of image effects when frames are switched during reproduction on the monitor; and
control means for selecting the image effects to be added by said image effect addition means and said switching image effect addition means, which are determined in advance in accordance with each frame title, when title information of each frame is recorded, and selecting a title corresponding to a date based on the date information of each frame and selecting image effects to be added by said image effect addition means and said switching image effect addition means which are determined in advance in correspondence with the title, when no title information of each frame is recorded.

19. A film image read apparatus comprising:
information read means for reading title information and date information of each frame which are recorded on a film;
image read means for reading a film image on each frame;
image effect addition means for adding a plurality of types of image effects to the read film images on the respective frames;
output means for continuously outputting the read film images on the respective frames to a monitor;
switching image effect addition means for adding a plurality of types of image effects when frames are switched during reproduction on the monitor; and
control means for selecting the image effects to be added by said image effect addition means and said switching image effect addition means, which are determined in advance in accordance with each frame title, when title information of each frame is recorded, and selecting image effects to be added by said image effect addition means and said switching image effect addition means which correspond to a previously selected title until a data based on the date information of each frame changes, when no title information of each frame is recorded.

20. A reproducing apparatus for automatically synthesizing predetermined graphic information with image information on the basis of additional information added to the image information.

21. A reproducing apparatus for automatically panning display of image information in a predetermined direction on the basis of additional information added to the image information.

22. A reproducing apparatus for fixing a color or luminance of image information to be displayed on a display to a predetermined state when a print time fixing signal added to the image information is detected.

23. The apparatus according to 22, wherein the print time fixing signal is an FTPM signal or series scene signal.

24. The apparatus according to claim 22, further comprising adjustment means for adjusting a color or luminance of a frame to be displayed, and control means for executing common adjustment for a plurality of frames to which the print time fixing signal is added when adjustment is performed by said adjustment means.

25. A reproducing apparatus for fixing a color or luminance of image information to be displayed on a display to a predetermined state when a signal indicating a common group and added to a plurality of image information is detected.

26. The apparatus according to claim 25, further comprising adjustment means for adjusting a color or luminance of a frame to be displayed, and control means for performing control to execute common adjustment for a plurality of frames to which the signal indicating the common group is added, when adjustment is performed by said adjustment means.

27. A reproducing method comprising automatically synthesizing predetermined graphic information with image information on the basis of additional information added to the image information.

28. A reproducing method comprising automatically panning display of image information in a predetermined direction on the basis of additional information added to the image information.

29. A reproducing method comprising fixing a color or luminance of image information to be displayed on a display to a predetermined state when a print time fixing signal added to the image information is detected.

30. The method according to 29, wherein the print time fixing signal is an FTPM signal or series scene signal.

31. The method according to claim 29, further comprising the step of executing common adjustment for a plurality of frames to which the print time fixing signal is added when a color or luminance of a frame to be displayed is adjusted.

32. A reproducing method comprising fixing a color or luminance of image information to be displayed on a display to a predetermined state when a signal indicating a common group and added to a plurality of image information is detected.

33. The method according to claim 32, further comprising the step of executing common adjustment for a plurality of frames to which the signal indicating the common group is added when a color or luminance of a frame to be displayed is adjusted.

34. A storage medium storing the reproducing method defined by claim 27 as a program.

35. A storage medium storing the reproducing method defined by claim 28 as a program.

36. A storage medium storing the reproducing method defined by any one of claims 29 to 31 as a program.

37. A storage medium storing the reproducing method defined by claim 32 or 33 as a program.
